Europäisches Patentamt

**European Patent Office**

**Office européen des brevets**

(11) Numéro de publication: **0 060 740
B1**

# (12) FASCICULE DE BREVET EUROPEEN

(45) Date de publication du fascicule du brevet:
**30.05.84**

(21) Numéro de dépôt: **82400302.4**

(22) Date de dépôt: **22.02.82**

(51) Int. Cl.³: **B 01 J 37/02**, B 01 J 23/89,
B 01 D 53/36

(54) **Catalyseur et procédé perfectionnés pour le traitement des gaz d'échappement des moteurs à combustion interne.**

(30) Priorité: **09.03.81 FR 8104596**

(43) Date de publication de la demande:
**22.09.82 Bulletin 82/38**

(45) Mention de la délivrance du brevet:
**30.05.84 Bulletin 84/22**

(84) Etats contractants désignés:
**CH DE FR GB IT LI NL SE**

(56) Documents cités:
**EP - A - 0 027 069
FR - A - 2 215 266
FR - A - 2 251 363
FR - A - 2 347 976
FR - A - 2 430 795
FR - A - 2 449 475**

(73) Titulaire: **Société Française des Produits pour Catalyse
"PROCATALYSE"**, 1-4, avenue de Bois-Préau,
**F-92506 Rueil-Malmaison (FR)**

(72) Inventeur: **Blanchard, Gilbert, 5, Allée des Acacias
Lagny-Le-Sec, F-60330 Le Plessis Belleville (FR)**
Inventeur: **Brunelle, Jean-Pierre Résidence Fontaine,
Saint-Martin Rue de la Planchette, F-95350 Saint-Brice
Sous Foret (FR)**
Inventeur: **Prigent, Michel, 11, rue des Marronniers,
F-92500 Rueil Malmaison (FR)**

(74) Mandataire: **Savina, Jacques, RHONE-POULENC
RECHERCHES Service Brevets Chimie et
Polymères 25, Quai Paul Doumer, F-92408 Courbevoie
Cedex (FR)**

# Description

La présente invention a pour objet des catalyseurs multifonctionnels, plus particulièrement destinés au traitement des gaz d'échappement des moteurs à combustion interne.

On entend par multifonctionnels, selon l'invention, des catalyseurs opérant l'oxydation en particulier du monoxyde de carbone et des hydrocarbures présents dans les gaz d'échappement ainsi que la réduction simultanée en particulier des oxydes d'azote présents dans ces gaz.

Dans les moteurs à combustion interne à essence, la composition des gaz d'échappement peut être réglée autour d'un équilibre stoechiométrique tel que l'oxydation et la réduction catalytique de ses divers constituants conduisent à de l'eau, du dioxyde de carbone et de l'azote. Les moyens généralement mis en œuvre pour régler la composition du gaz d'échappement autour de cette stoechiométrie sont notamment le réglage en continu du rapport air/carburant à l'admission du moteur et/ou l'introduction d'oxygène supplémentaire en amont du catalyseur.

Dans la pratique, ce réglage de la stoechiométrie n'est jamais parfait et la composition de gaz d'échappement varie en fait sur des périodes de l'ordre de la seconde d'une composition contenant un excès relatif de composés oxydants (réglage dit «pauvre») à une composition contenant un excès de composés réducteurs (réglage dit «riche») et réciproquement.

En particulier, le réglage dit «pauvre» est tel que les quantités d'oxygène et d'oxyde d'azote présentes sont supérieures à celles requises pour produire l'oxydation de l'oxyde de carbone, des hydrocarbures et de l'hydrogène présents. Inversement, et en particulier, le réglage dit «riche» est tel que les quantités d'oxyde de carbone, d'hydrocarbures et d'hydrogène présentes sont supérieures à celles requises pour produire la réduction de l'oxygène et des oxydes d'azote présents.

Il a déjà été proposé des catalyseurs pour traiter de tels gaz d'échappement. Ainsi, d'après Journal of Catalysis 56, 321 (1979) et 6° Congrès Nord-Américain de la Catalysis Society –CHICAGO – mars 79 – Communication $H_4$, on connaît des catalyseurs multifonctionnels ayant comme phase active de l'oxyde de cérium et des métaux précieux.

On connaît, d'après la demande EP-A-0 027 069, des catalyseurs multifonctionnels comportant un support à base d'oxyde réfractaire et une phase active constituée de cérium, de fer, d'au moins un métal pris dans le groupe comportant le platine et le palladium et d'au moins un métal pris dans le groupe comportant l'iridium et le rhodium.

De plus, le brevet FR-A-2 449 475 décrit des catalyseurs de post-combustion multifonctionnels comportant:

a) 0,03–3% en poids d'une phase active contenant du platine, du rhodium et, le cas échéant, un ou plusieurs des éléments aluminium, titane, étain, chrome, manganèse, cobalt et nickel, avec un rapport en poids du platine au rhodium de 2:1 à 20:1 et éventuellement un rapport atomique entre les métaux du groupe platine et les métaux non précieux de 1:6 à 2:1, de préférence de 1:4 à 1:1,

b) 5–15, de préférence 10% en poids d'un mélange de $CeO_2$ et $ZrO_2$, ces oxydes étant dans un rapport en poids de 20–80:80–20,

c) 1–10, de préférence 2–6% en poids de $Fe_2O_3$, ainsi que

d) une quantité complétant à 100% en poids d'oxyde d'aluminium de la colonne de transition et obtenus en ce que l'on imprègne un matériau de support en $Al_2O_3$ de la colonne de transition, éventuellement à réseau stabilisé par des métaux alcalino-terreux, avec une solution aqueuse de sels de cérium, zirconium et fer, ou qu'on le mélange avec les oxydes de ces éléments, puis le recuit à l'air, durant 30–180 minutes, à 500–700°C, après quoi on imprègne le support avec une solution aqueuse d'un sel de platine, de rhodium ou éventuellement d'un composant métallique non précieux, on le sèche, puis on le traite à des températures comprises entre 250 et 650, de préférence 450 et 550°C, dans un courant gazeux contenant de l'hydrogène.

Par ailleurs, le brevet FR-A-2 430 795 décrit un procédé de fabrication d'un catalyseur multifonctionnel consistant à déposer sur un support minéral réfractaire 0,5 à 30 g de cérium, 0 à 20 g de fer, 0 à 10 g de lanthane, 0,005 à 0,3 g de rhodium, 0,05 à 3 g de platine, 0 à 12 g de palladium et du phosphore.

D'après la demande japonaise n° J5 3062-777 (publication JA 138 717) on connaît également des catalyseurs multifonctionnels ayant comme phase active de l'oxyde de fer et des métaux précieux.

Ces catalyseurs, bien que possédant dans certains cas une activité initiale suffisante pour satisfaire les normes antipollution adoptées dans des pays comme les Etats-Unis et le Japon, présentent l'inconvénient majeur de perdre une bonne partie de leur activité multifonctionnelle au cours de leur fonctionnement dans un pot catalytique.

La demanderesse a trouvé de nouveaux catalyseurs multifonctionnels à base de fer, de cérium, de gallium et/ou d'yttrium et de métaux précieux remédiant aux inconvénients présentés par les catalyseurs de l'art antérieur et qui s'avèrent, de façon totalement inattendue, présenter une excellente activité et surtout une stabilité au cours du temps très supérieure à celle des catalyseurs décrits dans l'art antérieur.

La présente invention concerne en effet un catalyseur multifonctionnel et comportant: un support sur lequel est déposée une phase active constituée de cérium, de fer, d'au moins un métal pris dans le groupe comportant le platine et le palladium et d'au moins un métal pris dans le groupe comportant l'iridium et le rhodium, caractérisé en ce que la phase active comporte, en outre, le gallium et/ou l'yttrium.

Le support mis en œuvre selon l'invention peut notamment être à base d'oxyde réfractaire et, par exemple, constitué par de la silice, de l'alumine, des alumino-silicates ou des oxydes mixtes comprenant par exemple de l'alumine associée avec de la silice, de l'oxyde de zirconium, de l'oxyde de cérium et/ou de l'oxyde de titane.

Selon un mode de mise en œuvre préféré de l'invention, on utilise un support à base de particules d'alumine. Ce support présente de préférence une surface spécifique comprise entre 25 et 250 m²/g et, plus particulièrement comprise entre 70 et 150 m²/g. Il présente un volume poreux total de préférence compris entre 0,5 et 2 cm³/g et, plus particulièrement compris entre 0,8 et 1,7 cm³/g. Il possède de préférence une macroporosité telle que le volume poreux des pores dont le diamètre est supérieur à 1000 Å est compris entre environ 0,05 et 0,6 cm³/g et, de préférence, entre 0,2 et 0,5 cm³/g.

De tels supports peuvent notamment avoir été fabriqués à partir de l'alumine active obtenue selon le procédé décrit dans le brevet américain n° 2 915 365 et agglomérée selon le procédé décrit dans le brevet américain n° 2 881 051.

Ils peuvent également avoir été fabriqués par autoclavage en milieu neutre ou acide des agglomérés précédents, séchage et calcination notamment tel que décrit dans les brevets français n° 1 449 904 et 1 386 364.

Les supports mis en œuvre peuvent également avoir été obtenus selon le procédé décrit dans la demande de brevet français n° 77 23 880 publiée sous le numéro 2 399 276.

Les supports d'alumine mis en œuvre peuvent également avoir été fabriqués selon le procédé décrit dans la demande de brevet européen n° 15 801.

D'une manière générale, les supports à base de particules d'alumine mis en œuvre selon l'invention peuvent avoir été traités ainsi qu'il est bien connu de l'homme de l'art par des agents porogènes tels que ceux à base de cellulose, naphtaline, gommes naturelles, polymères synthétiques, etc... afin de leur conférer les propriétés de porosité désirée.

Le support mis en œuvre selon l'invention peut également être constitué par un ou plusieurs oxydes réfractaires, de préférence employé sous forme d'une pellicule, revêtement appliqué sur un monolithe métallique ou en matière céramique; ledit monolithe étant de préférence sous forme d'une structure inerte et rigide en nids d'abeille comprenant des canaux ou conduits. De tels supports sont bien connus de l'homme de l'art et ont été largement décrits dans la littérature.

Les oxydes réfractaires utilisés sont notamment choisis parmi le groupe comprenant: les oxydes d'aluminium, magnésium, calcium, strontium, baryum, scandium, lanthanides, indium, thallium, silicium, titane, zirconium, hafnium, thorium, germanium, étain, plomb, vanadium, nobium, tantale, chrome, molybdène, tungstène et rhénium. On utilise de préférence un revêtement en oxyde d'aluminium.

Les monolithes métalliques utilisés sont notamment ceux obtenus à partir d'alliages de chrome, aluminium et cobalt tels que ceux connus sous la marque KANTHAL ou ceux obtenus à partir d'alliages de fer, de chrome, d'aluminium et d'yttrium et connus sous la marque FECRALLOY. Le métal peut aussi être de l'acier carboné ou de la fonte simple.

On peut obtenir le revêtement en oxyde d'aluminium de ces substrats métalliques par chauffage en atmosphère d'oxygène des alliages à base d'aluminium dans des conditions de durée et de température qui permettent de former, à partir de l'aluminium contenu dans l'alliage, une couche superficielle d'oxyde d'aluminium sur laquelle on effectue un dépôt d'alumine active. Dans le cas des aciers carbonés ou de la fonte, on peut obtenir un revêtement d'une couche de diffusion aluminium/fer par recuit de fer ou d'acier recouvert d'aluminium pendant au moins 1 minute à 600–1200°C sur laquelle on dépose une couche d'alumine active.

Les monolithes en matière céramique utilisés sont notamment ceux comportant comme matière principale: la cordiérite, l'alumine, la mullite, le zirconium, la zirconmullite, le titanate de baryum, la porcelaine, l'oxyde de thorium, l'oxyde de magnésium, la stéatite, les carbones de bore ou de silicium, le support réfractaire monolithique.

On peut obtenir le revêtement en oxyde d'aluminium de ces monolithes céramiques par exemple par application d'hydrate d'alumine puis calcination, par dépôt d'un sel d'aluminium puis calcination ou par application d'une couche d'alumine active puis calcination.

La structure cellulaire en nids d'abeille peut être de forme hexagonale, tétragonale, triangulaire ou ondulée, elle doit permettre le passage de gaz dans les canaux ou conduits formés lors de leur fabrication par extrusion, laminage, solidification d'éléments en forme de feuille, etc. . . .

Par ailleurs, les supports mis en œuvre selon l'invention sont avantageusement traités de façon à leur conférer une bonne stabilité thermique au cours du temps. Ces traitements, bien connus de l'homme de l'art, consistent notamment dans une stabilisation de la particule d'alumine ou du revêtement en oxyde d'aluminium par les métaux alcalino-terreux, la silice et/ou les terres rares.

Les supports stabilisés décrits dans les brevets français n° 2 257 335 et 2 290 950 conviennent aux fins de l'invention.

La teneur en métal du groupe constitué par le platine et le palladium du catalyseur varie généralement entre environ 0,04 et 0,5% en poids par rapport au support et de préférence, entre environ 0,05 et 0,15% en poids. Celle en métal du groupe constitué par l'iridium et le rhodium varie généralement entre environ 0,002 et 0,1% en poids et de préférence entre environ 0,005 et 0,02% en poids. De préférence, le rapport en poids de platine et/ou de palladium au poids d'in- cium et/ou de rhodium est compris entre environ 4 et environ 40 et de préférence entre 7 et 20.

Selon un mode de mise en œuvre particulier des catalyseurs selon l'invention, on préféra utiliser le rhodium associé au platine et/ou au palladium.

La teneur totale en cérium et fer des catalyseurs selon l'invention est comprise entre environ 0,1 et environ 10% en poids rapporté au support. Cette teneur est de préférence comprise entre 0,3 et 6,5%.

La teneur en gallium des catalyseurs selon l'invention est comprise entre environ 0,01 et environ 10% en poids par rapport au support. Cette teneur est de préférence comprise entre 0,01 et 2,0% et plus particulièrement entre 0,02 et 0,5%.

La teneur en yttrium des catalyseurs selon l'invention est comprise entre environ 0,01 et environ 10% en poids par rapport au support. Cette teneur est de préférence comprise entre 0,01 et 2% et plus particulièrement entre 0,02 et 0,5%.

Selon une variante de l'invention, les catalyseurs peuvent en outre comporter l'un au moins des métaux suivants: tungstène, cuivre, manganèse, étain, germanium, tantale, uranium, niobium. La teneur totale en poids de ces métaux rapportés au support est comprise entre environ 0,1 et 5%.

Les catalyseurs selon l'invention peuvent être préparés selon les méthodes courantes, soit par imprégnation du support soit par apport des métaux de la phase active lors de la fabrication du support.

On opère, de préférence, par imprégnation du support au moyen de solution de composés minéraux ou organiques des métaux que l'on désire introduire. L'imprégnation peut être faite au moyen de solutions communes aux métaux ou successivement avec différentes solutions.

Selon un mode de mise en œuvre particulier, on imprègne successivement le support avec une solution contenant des composés du fer, du cérium et du gallium et/ou de l'yttrium puis avec une ou des solutions contenant des composés des métaux précieux que l'on désire introduire.

Comme composés du fer, du cérium, du gallium et de l'yttrium que l'on peut mettre en œuvre, on citera notamment les sels de fer, de cérium, de gallium et d'yttrium et plus particulièrement le nitrate ferrique, le citrate de fer ammoniacal, le chlorure ferrique et le nitrate céreux, l'acétate céreux, le chlorure céreux et le nitrate cérique ammoniacal, le nitrate de gallium, le trichlorure de gallium, l'acétylacétonate de gallium, le nitrate d'yttrium, le trichlorure de gallium mono-hydraté.

Comme composés du rhodium, du platine et du palladium que l'on peut mettre en œuvre, on citera notamment le trichlorure de rhodium hydraté, l'acide chloroplatinique, le chlorure de palladium, le nitrate de palladium ainsi que le dichlorure de rhodium III chloropentamine et les dichlorures de platine II et palladium II tétramine.

Lorsque l'on met en œuvre un support à base d'oxyde réfractaire et en particulier d'oxyde d'aluminium, la profondeur d'imprégnation peut être avantageusement réglée par l'utilisation de méthodes connues de l'homme de l'art et en particulier par ajout dans la solution des métaux précieux d'une certaine quantité d'acide minéral ou organique. On utilise couramment les acides nitrique, chlorhydrique et fluorhydrique ou les acides acétique, citrique, oxalique.

Après imprégnation du support, le catalyseur est ensuite séché puis activé dans un courant d'air à une température comprise entre environ 300 et 800°C pendant quelques heures.

L'activation du catalyseur peut être avantageusement réalisée en atmosphère réductrice à une température comprise entre environ 200 et 700°C, on peut par exemple utiliser comme agents réducteurs l'hydrogène, l'oxyde de carbone et/ou l'hydrogène sulfuré.

Lorsque l'on met en œuvre un support constitué en particulier d'un revêtement d'alumine déposé sur un substrat métallique ou en matière céramique, on opère avantageusement en mettant en contact le substrat avec une dispersion aqueuse d'un précurseur d'alumine qui contient des sels ou oxydes de fer et cérium et de gallium et/ou d'yttrium dissouts, on sèche puis on calcine à 500–700°C environ, on répète éventuellement ces opérations, puis on introduit les métaux précieux et on termine les opérations de la façon qui a été explicitée ci-dessus dans le cas des supports à base d'oxyde réfractaire.

On a constaté que les catalyseurs selon l'invention permettent d'éliminer très efficacement la majeure partie de l'oxyde de carbone, des hydrocarbures imbrûlés ainsi que des oxydes d'azote présents dans les gaz d'échappement des moteurs à combustion interne et que, de plus, ils possèdent une stabilité remarquable au cours du temps.

Les examples non limitatifs données ci-après illustrent l'invention et en particulier les avantages des présents catalyseurs par rapport à ceux décrits dans l'art antérieur.

Exemple 1

Préparation d'un catalyseur (A) de l'art antérieur

100 g de billes d'alumine active ayant une surface spécifique de 250 m²/g et un volume poreux total de 0,55 cm³/g sont imprégnées par 55 cm³ d'une solution de nitrate de cérium contenant 5,0 g de cérium.

Après 30 minutes de contact, les billes sont séchées à 150°C puis calcinées sous air à 400°C pendant 3 heures. Elles sont ensuite imprégnées par 55 cm³ d'une solution d'acide chloroplatinique et de trichlorure de rhodium hydraté contenant 73 mg de platine et 7,3 mg de rhodium. Après 30 minutes de contact, les billes sont séchées à 150°C puis activées à 400°C pendant 3 heures dans un courant d'hydrogène circulant à 200 litres par heure.

Le catalyseur (A) ainsi préparé contient en poids rapporté au support 0,073% de platine, 0,0073% de rhodium et 5% de cérium.

## Exemple 2

Préparation d'un catalyseur (B) de l'art antérieur

100 g de billes d'alumine active ayant les mêmes caractéristiques texturales que celles décrites dans l'exemple précédent, sont imprégnées par 55 cm³ d'une solution de nitrate ferrique contenant 5,0 g de fer.

Après 30 minutes de contact, les billes sont séchées à 150°C puis calcinées sous air à 400°C pendant 3 heures. Elles sont ensuite imprégnées par 55 cm³ d'une solution d'acide chloroplatinique et de trichlorure de rhodium hydraté contenant 73 mg de platine et 7,3 mg de rhodium. Après 30 minutes de contact, les billes sont séchées à 150°C puis activées à 400°C pendant 3 heures dans un courant d'hydrogène circulant à 200 litres par heure.

Le catalyseur (B) ainsi préparé contient en poids rapporté au support 0,073% de platine, 0,0073% de rhodium et 5% de fer.

## Exemple 3

Préparation d'un catalyseur (C) selon l'invention

On prépare 100 g de billes d'alumine de structure gamma selon les procédés décrits dans les brevets français n° 1 449 904 et 1 386 364 par autoclavage en présence d'acide d'agglomérés d'alumine active, séchage et calcination.

Les billes d'alumine obtenues présentent une surface spécifique de 100 m²/g, un volume poreux total de 0,90 cm³/g et un volume de 0,40 cm³/g constitué par des macropores ayant un diamètre supérieur à 1000 Å (100 mm).

Ces billes sont imprégnées par 90 cm³ d'une solution aqueuse de nitrate de fer, de nitrate céreux et de nitrate de gallium contenant 2,0 g der fer, 4,0 g de cérium et 0,08 g de gallium.

Après 30 minutes de contact, les billes sont séchées à 150°C puis calcinées sous air à 400°C pendant 3 heures.

Elles sont ensuite imprégnées par 90 cm³ d'une solution d'acide chloroplatinique et de trichlorure de rhodium hydraté contenant 73 mg de platine et 7,3 mg de rhodium.

Après 30 minutes de contact, les billes sont séchées à 150°C puis activées à 400°C pendant 3 heures dans un courant d'hydrogène circulant à 200 litres par heure.

Le catalyseur (C) ainsi préparé contient en poids rapporté au support 0,073% de platine; 0,0073% de rhodium; 2,0% de fer, 4,0% de cérium et 0,08% de gallium.

## Exemple 4

Préparation d'un catalyseur (D) selon l'invention

On prépare 100 g de billes d'alumine selon le procédé décrit dans la demande de brevet français n° 79 04810.

Ces billes présentent une surface spécifique de 100 m²/g, un volume poreux total de 1,20 cm³/g et un volume de 0,45 cm³/g constitué par des macropores ayant un diamètre supérieur à 1000 Å (100 nm).

Le mode opératoire utilisé pour l'imprégnation est semblable à celui décrit dans l'exemple 3 ci-dessus. On utilise cette fois 120 cm³ d'une solution aqueuse de nitrate ferrique, de nitrate de cérium et de nitrate de gallium contenant 1,5 g de fer, 3,0 g de cérium et 0,2 g de gallium, puis 120 cm³ d'une solution d'acide chloroplatinique et de trichlorure de rhodium hydraté contenant 73 mg de platine et 7,3 mg de rhodium.

Le catalyseur (D) ainsi préparé contient en poids rapporté au support 0,073% de platine; 0,0073% de rhodium, 1,5% de fer; 3% de cérium et 0,2% de gallium.

## Exemple 5

Préparation d'un catalyseur (E) selon l'invention

On prépare une suspension dans l'eau d'alumine convenant au revêtement d'une structure monolithe métallique connue sous la marque Fecralloy.

Le monolithe de 100 g est plongé dans la suspension à pH = 3,5 contenant 30% en poids d'alumine. Le support précédemment cité est égoutté et séché pour que les canaux soient vidés, puis il est calciné à 600°C durant 3 heures. Le monolithe ainsi revêtu est immergé dans une solution aqueuse de nitrate ferrique, de nitrate de cérium et de nitrate de gallium pendant 30 minutes, puis il est égoutté et séché à 150°C et calciné à 400°C durant 3 heures. Les concentrations en nitrate ferrique, en nitrate de cérium et en nitrate de gallium dans la solution sont telles que, après immersion et calcination, le monolithe contient 0,8% en poids de fer, 4% en poids de cérium et 0,2% en poids de gallium.

Le substrat est ensuite imprégné par trempage dans une solution aqueuse d'acide chloroplatinique et de trichlorure de rhodium hydraté.

Les concentrations en acide chloroplatinique et en trichlorure de rhodium hydraté, sont telles que le monolithe de 100 g est imprégné par 73 mg de platine et 7,3 mg de rhodium. Après 30 minutes de contact, le monolithe est égoutté et séché à 150°C puis activé à 400°C pendant 3 heures dans un courant d'hydrogène de 200 litres par heure.

Le catalyseur (E) ainsi préparé contient en poids rapporté au support: 0,073% de platine; 0,0073% de rhodium; 0,8% de fer; 4% de cérium et 0,2% de gallium.

## Exemple 6

Préparation d'un catalyseur (F) selon l'invention

On prépare 100 g de billes d'alumine de structure gamma selon les procédés décrits dans les brevets français n° 1 449 904 et 1 386 364 par autoclavage en présence d'acide d'agglomérés d'alumine active, séchage et calcination.

Les billes d'alumine présentent une surface spécifique de 100 m²/g, un volume poreux total de 0,90 cm³/g et un volume de 0,40 cm³/g constitué par des macropores ayant un diamètre supérieur à 1000 Å (100 nm).

Ces billes sont imprégnées par 90 cm³ d'une solution aqueuse de nitrate de fer, de nitrate céreux et de nitrate d'yttrium contenant 1,5 g de fer, 4,0 g de cérium et 0,2 g d'yttrium.

Après 30 minutes de contact, les billes sont séchées à 150°C puis calcinées sous air à 400°C pendant 3 heures.

Elles sont ensuite imprégnées par 90 cm³ d'une solution d'acide chloroplatinique et de trichlorure de rhodium hydraté contenant 73 mg de platine et 7,3 mg de rhodium.

Après 30 minutes de contact, les billes sont séchées à 150°C puis activées à 400°C pendant 3 heures dans un courant d'hydrogène circulant à 200 litres par heure.

Le catalyseur (F) ainsi préparé contient en poids rapporté au support 0,073% de platine; 0,0073% de rhodium; 1,5% de fer; 4,0% de cérium et 0,2% d'yttrium.

Exemple 7

Préparation d'un catalyseur (G) selon l'invention

On prépare 100 g de billes d'alumine selon le procédé décrit dans la demande de brevet français n° 79 04810.

Ces billes présentent une surface spécifique de 100 m²/g, un volume poreux total de 1,20 cm³/g et un volume de 0,45 cm³/g constitué par des macropores ayant un diamètre supérieur à 1000 Å (100 nm).

Le mode opératoire utilisé pour l'imprégnation est semblable à celui décrit dans l'exemple 6; on utilise cette fois 120 cm³ d'une solution aqueuse de nitrate ferrique, de nitrate céreux et de nitrate d'yttrium contenant 2 g de fer, 4,0 g de cérium et 0,08 g d'yttrium, puis 120 cm³ d'une solution d'acide chloroplatinique et de trichlorure de rhodium hydraté contenant 73 mg de platine et 7,3 mg de rhodium.

Le catalyseur (G) ainsi préparé contient en poids rapporté au support 0,073% de platine; 0,0073% de rhodium; 2% de fer; 4% de cérium et 0,08% d'yttrium.

Exemple 8

Préparation d'un catalyseur (H) selon l'invention

On prépare une suspension dans l'eau d'alumine convenant au revêtement d'une structure monolithe céramique en nids d'abeilles.

Le mode opératoire utilisé pour l'imprégnation est semblable à celui décrit dans l'exemple 5. On utilise cette fois une solution aqueuse de nitrate ferrique, de nitrate de cérium et de nitrate d'yttrium dont les concentrations sont telles qu'après immersion et calcination, le monolithe contient 0,8% en poids de fer, 3% en poids de cérium et 0,2% en poids d'yttrium. Le substrat est ensuite imprégné par trempage dans une solution aqueuse d'acide chloroplatinique et de trichlorure de rhodium hydraté.

Le catalyseur (H) ainsi préparé contient en poids rapporté au support 0,073% de platine, 0,0073% de rhodium, 0,8% de fer, 3% de cérium et 0,2% en poids d'yttrium.

Exemple 9

Préparation d'un catalyseur (I) selon l'invention

On prépare 100 g de billes d'alumine de structure gamma selon les procédés décrits dans les brevets français n° 1 449 904 et 1 386 364 par autoclavage en présence d'acide d'agglomérés d'alumine active, séchage et calcination.

Le mode opératoire utilisé pour l'imprégnation est semblable à celui décrit dans l'exemple 3. On utilise cette fois 90 cm³ d'une solution aqueuse de nitrate ferrique, de nitrate céreux, de nitrate d'yttrium et de nitrate de gallium contenant 1 g de fer, 3,0 g de cérium et 1,0 g d'yttrium et 0,2 g de gallium, puis 90 cm³ d'une solution d'acide chloroplatinique et de trichlorure de rhodium hydraté contenant 73 mg de platine et 7,3 mg de rhodium.

Le catalyseur (I) ainsi préparé contient en poids rapporté au support 0,073% de platine; 0,0073% de rhodium; 1% de fer; 3,0% de cérium; 1,0% d'yttrium et 0,2% de gallium.

Exemple 10

Préparation d'un catalyseur (J) selon l'invention

On prépare une suspension dans l'eau d'alumine convenant au revêtement d'une structure monolithe céramique en nids d'abeille.

Le mode opératoire utilisé pour l'imprégnation est semblable à celui décrit dans l'exemple 5. On utilise cette fois une solution aqueuse de nitrate ferrique, de nitrate de cérium, de nitrate de gallium et de nitrate d'yttrium dont les concentrations sont telles qu'après immersion et calcination, le monolithe contient 0,8% en poids de fer, 4% en poids de cérium, 0,15% en poids de gallium et 0,15% en poids d'yttrium. Le substrat est ensuite imprégné par trempage dans une solution aqueuse d'acide chloroplatinique et de trichlorure de rhodium hydraté.

Le catalyseur (J) ainsi préparé contient en poids rapporté au support 0,073% de platine, 0,0073% de rhodium, 0,8% de fer, 4% de cérium, 0,15% de gallium et 0,15% d'yttrium.

Exemple 11

Préparation d'un catalyseur (K) selon l'invention

100 g de billes d'alumine tel que décrit à l'exemple 3 sont imprégnées par 90 cm³ d'une solution aqueuse de nitrate de fer, de nitrate de cérium, de nitrate d'yttrium et de nitrate de manganèse contenant 1,0 g de fer, 4 g de cérium, 0,2 g d'yttrium et 1 g de manganèse.

Après 30 minutes de contact, les billes sont séchées à 150°C puis calcinées sous air à 400°C pendant 3 heures. Elles sont ensuite imprégnées par 90 cm³ d'une solution d'acide chloroplatinique de chlorure de palladium et de trichlorure de rhodium hydraté contenant 73 mg de platine et 7,3 mg de rhodium.

Après 30 minutes de contact, les billes sont séchées à 150°C puis activées à 400°C pendant 3 heures dans un courant d'hydrogène de 200 litres par heure.

Le catalyseur (K) ainsi préparé contient en poids rapporté au support 0,073% de platine; 0,0073% de rhodium; 1,0% de fer; 4% de cérium, 0,2% d'yttrium et 1% de manganèse.

Exemple 12

Préparation d'un catalyseur (L) selon l'invention

100 g de billes d'alumine tel que décrit à l'exemple 4 sont imprégnées par 120 cm³ d'une solution aqueuse de nitrate de fer, de nitrate de cérium, de nitrate de gallium et d'acide méta-tungtique contenant 1,5 g de fer, 3,5 g de cérium, 0,2 g de gallium et 1 g de tungstène.

Après 30 minutes de contact, les billes sont séchées à 150°C puis calcinées sous air à 400°C pendant 3 heures. Elles sont ensuite imprégnées par 120 cm³ d'une solution d'acide chloroplatinique de chlorure de palladium et de trichlorure de rhodium hydraté contenant 73 mg de platine, 29,2 mg de palladium et 7,3 mg de rhodium.

Après 30 minutes de contact, les billes sont séchées à 150°C puis activées à 400°C pendant 3 heures dans un courant d'hydrogène de 200 litres par heure.

Le catalyseur (L) ainsi préparé contient en poids rapporté au support 0,073% de platine; 0,0292% de palladium; 0,0073% de rhodium, 1,5% de fer, 3,5% de cérium, 0,2% de gallium et 1% de tungstène.

Exemple 13

Activités des divers catalyseurs mesurées sur voiture selon le cycle américain CVS–CH

Le présent exemple rassemble les résultats obtenus sur voiture selon le cycle américain CVS–CH avec les divers catalyseurs (A), (B), (C), (D), (E), (F), (G), (H), (I), (J), (K), et (L), décrits respectivement dans les exemples 1 à 12.

Les conditions de ce test sont précisées dans la référence suivante: «Federal Register, Vol. 42, n° 124 – June 28, 1977, pages 32906 à 33004, Title 40 Protection of Environment, Chap. 1, Environmental Protection Agency, Part 86 Central of air pollution from new-motor vehicles and new-motor vehicle engines».

Le véhicule utilisé est une RENAULT R 17 TS équipée d'un dispositif d'injection électronique prototype Bosch-L Jetronic régulé par une sonde à oxygène. L'inertie de ce véhicule est de 2750 lbs (1250 kg). Le réglage du frein hydraulique simulant la résistance à l'avancement sur route effectué conformément à la norme fédérale américaine correspond sur le banc à rouleaux utilisé à une force de traction à la balance de 25 Kg f à 80 km/h.

Les émissions de base du véhicule sans pot catalytique sont les suivantes:

CO : 12,3 g/mile (1609 m)
HC : 1,8 g/mile (1609 m)
$NO_x$ : 2,4 g/mile (1609 m)

Un pot catalytique expérimental de type cylindrique à circulation radiale, d'un volume de 1700 cm³ a été adapté sur la tubulure d'échappement à une distance d'environ 1,7 m du moteur.

Le tableau ci-après rassemble les résultats obtenus avec les divers catalyseurs (A), (B), (C), (D), (E), (F), (G), (H), (I), (J), (K) et (L) décrits respectivement dans les exemples 1 à 12.

Tableau: Emissions d'oxyde de carbone (CO), d'hydrocarbures (HC) et d'oxydes d'azote ($NO_x$) mesurées sur voiture suivant le cycle américain CVS-CH et exprimées en gramme par mile (1609 m).

| | Numéro de l'exemple | Référence du catalyseur | Emissions après vieillissement du catalyseur sur banc-moteur pendant 600 heures à 600 °C | | |
| --- | --- | --- | --- | --- | --- |
| | | | CO | HC | $NO_x$ |
| ART ANTERIEUR | 1 | A | 6,60 | 0,77 | 1,12 |
| | 2 | B | 8,40 | 1,35 | 1,88 |
| INVENTION | 3 | C | 4,06 | 0,52 | 0,48 |
| | 4 | D | 3,04 | 0,40 | 0,40 |
| | 5 | E | 5,02 | 0,55 | 0,65 |
| | 6 | F | 3,27 | 0,43 | 0,45 |
| | 7 | G | 4,47 | 0,52 | 0,53 |
| | 8 | H | 5,25 | 0,59 | 0,64 |
| | 9 | I | 2,95 | 0,38 | 0,41 |
| | 10 | J | 4,87 | 0,52 | 0,60 |
| | 11 | K | 3,74 | 0,46 | 0,40 |
| | 12 | L | 2,91 | 0,36 | 0,37 |

**Revendications**

1. Catalyseur pour le traitement des gaz d'échappement des moteurs à combustion interne comportant: un support sur lequel est déposée une phase active constituée de cérium, de fer, d'au moins un métal pris dans le groupe comportant le platine et le palladium et d'au moins un métal pris dans le groupe comportant l'iridium et le rhodium, caractérisé en ce que la phase active comporte en outre au moins un métal choisi parmi le gallium et l'yttrium.

2. Catalyseur selon la revendication 1 caractérisé en ce que le support est pris dans le groupe constitué par les oxydes réfractaires comme: la silice, l'alumine, les oxydes mixtes comme l'alumine associée à de la silice, de l'oxyde de zirconium, de l'oxyde de cérium et/ou de l'oxyde de titane, les aluminosilicates, de préférence employés sous forme d'une pellicule appliquée sur un substrat métallique ou en matière céramique, ledit substrat étant de préférence sous forme d'une structure inerte et rigide en nids d'abeille comprenant des canaux ou conduits.

3. Catalyseur selon la revendication 2 caractérisé en ce que le support est choisi parmi le groupe comportant d'une part des particules d'alumine présentant une surface spécifique comprise entre 25 et 250 m²/g et, plus particulièrement comprise entre 70 et 150 m²/g, un volume poreux total compris entre 0,5 et 2 cm³/g et, plus particulièrement compris entre 0,8 et 1,7 cm³/g, une macroporosité telle que le volume poreux des pores dont le diamètre est supérieur à 1000 Å (100 nm) est compris entre environ 0,05 et 0,6 cm³/g et, de préférence entre 0,2 et 0,5 cm³/g et, d'autre part, des substrats métalliques ou céramiques en nids d'abeille revêtus d'une pellicule d'oxyde d'aluminium.

4. Catalyseur selon la revendication 1 caractérisé en ce que la teneur en métal du groupe constitué par le platine et le palladium est comprise entre environ 0,04 et environ 0,5% en poids par rapport au support, celle en métal du groupe constitué par l'iridium et le rhodium est comprise entre environ 0,002 et environ 0,1% en poids par rapport au support, la teneur totale en cérium et fer est comprise entre environ 0,1 et environ 10% en poids par rapport au support, la teneur en gallium et en yttrium est comprise entre environ 0,01 et 10% en poids par rapport au support.

5. Catalyseur selon la revendication 4 caractérisé en ce que la teneur en métal du groupe constitué par le platine et le palladium est comprise entre 0,05 et 0,15%, celle en métal du groupe constitué par l'iridium et le rhodium est comprise entre 0,005 et 0,02%, la teneur en gallium et en yttrium est comprise entre 0,02 et 0,5%.

6. Catalyseur selon l'une quelconque des revendications précédentes caractérisé en ce que la phase active comporte en outre au moins l'un des métaux: tungstène, cuivre, manganèse, étain, germanium, tantale, uranium, niobium dans une teneur totale en poids comprise entre environ 0,1 et 5% rapportée au support.

7. Procédé de traitement des gaz d'échappement des moteurs à combustion interne permettant notamment d'éliminer la majeure partie de l'oxyde de carbone, des hydrocarbures imbrûlés et des oxydes d'azote présents dans ces gaz caractérisé en ce que l'on met en œuvre le catalyseur selon l'une quelconque des revendications 1 à 6.

**Claims**

1. Catalyst for the treatment of the exhaust gases from internal combustion engines, comprising: a support on which an active phase is deposited which consists of cerium, iron, at least one metal taken from the group comprising platinum and palladium and at least one metal taken from the group comprising iridium and rhodium, characterised in that the active phase also contains at least one metal chosen from gallium and yttrium.

2. Catalyst according to Claim 1, characterised in that the support is taken from the group comprising refractory oxides such as: silica, alumina, mixed oxides such as alumina in combination with silica, zirconium oxide, cerium oxide and/or titanium oxide, and alumino-silicates, preferably employed in the form of a film applied to a metal substrate or ceramic substrate, the said substrate preferably being in the form of a rigid inert honeycomb structure possessing channels or ducts.

3. Catalyst according to Claim 2, characterised in that the support is chosen from amongst the group comprising, on the one hand, alumina particles having a specific surface area of between 25 and 250 m²/g and more particularly of between 70 and 150 m²/g, a total pore volume of between 0.5 and 2 cm³/g and more particularly of between 0.8 and 1.7 cm³/g, and a macroporosity such that the volume of the pores having a diameter of more than 1,000 Å (100 nm) is between about 0.05 and 0.6 cm³/g and preferably between 0.2 and 0.5 cm³/g, and, on the other hand, honeycomb metal substrates or ceramic substrates coated with a film of aluminium oxide.

4. Catalyst according to Claim 1, characterised in that the proportion of the metal from the group comprising platinum and palladium is between about 0.04 and about 0.5% by weight, relative to the support, the proportion of the metal from the group comprising iridium and rhodium is between about 0.002 and about 0.1% by weight, relative to the support, the total proportion of cerium and iron is between about 0.1 and about 10% by weight, relative to the support, and the proportion of gallium and yttrium is between about 0.01 and 10% by weight, relative to the support.

5. Catalyst according to Claim 4, characterised in that the proportion of the metal from the group comprising platinum and palladium is between 0.05 and 0.15%, the proportion of the metal from the group comprising iridium and rhodium is between 0.005 and 0.02% and the proportion of gallium and yttrium is between 0.02 and 0.5%.

6. Catalyst according to any one of the preceding claims, characterised in that the active phase also contains at least one of the metals: tungsten, copper, manganese, tin, germanium, tantalum, uranium and niobium, in a total proportion by weight of between about 0.1 and 5%, relative to the support.

7. Process for the treatment of exhaust gases from internal combustion engines, making it possible, in particular, to remove the major part of the carbon monoxide, the unburnt hydrocarbons and the nitrogen oxides present in these gases, characterised in that the catalyst according to any one of Claims 1 to 6 is used.

**Patentansprüche**

1. Katalysator zur Behandlung der Abgase aus Motoren mit innerer Verbrennung, enthaltend einen Träger, auf dem eine aktive Phase aufgebracht ist, die aus Cer, Eisen, wenigstens einem Metall der Gruppe von Platin und Palladium und wenigstens einem Metall der Gruppe von Iridium und Rhodium besteht, dadurch gekennzeichnet, dass die aktive Phase ausserdem noch mindestens ein Metall enthält, das unter Gallium und Yttrium gewählt ist.

2. Katalysator nach Anspruch 1, dadurch gekennzeichnet, dass der Träger aus der Gruppe gewählt ist, die aus den feuerfesten Oxiden wie Siliciumdioxid, Aluminiumoxid, den Mischoxiden wie Aluminiumoxid mit Siliciumdioxid, Zirkonoxid, Ceroxid und/oder Titanoxid oder den Aluminosilikaten besteht, die vorzugsweise in der Form eines auf ein Metall- oder Keramikgerüst aufgebrachten Films verwendet werden, wobei das Gerüst vorzugsweise in Form einer inerten und festen Bienenwabenstruktur mit Kanälen oder Rohren vorliegt.

3. Katalysator nach Anspruch 2, dadurch gekennzeichnet, dass der Träger aus der Gruppe gewählt ist, die einerseits aus Siliciumdioxidteilchen besteht, die eine spezifische Oberfläche zwischen 25 und 250 m$^2$/g und insbesondere zwischen 70 und 150 m$^2$/g, ein gesamtes Porenvolumen zwischen 0,5 und 2 cm$^3$/g und insbesondere zwischen 0,8 und 1,7 cm$^3$/g und eine solche Makroporosität haben, dass das Porenvolumen der Poren, deren Durchmesser grösser ist als 1000 Å (100 nm) ist, zwischen 0,05 und 0,6 cm$^3$/g und vorzugsweise zwischen 0,2 und 0,5 cm$^3$/g liegt, andererseits aus einem mit einer Aluminiumoxidschicht überzogenen Metall- oder Keramikgerüst in Wabenform besteht.

4. Katalysator nach Anspruch 1, dadurch gekennzeichnet, dass der Gehalt an Metallen der Gruppe von Platin und Palladium zwischen etwa 0,04 und etwa 0,5 Gew.%, bezogen auf den Träger, der Gehalt an Metallen der Gruppe von Iridium und Rhodium zwischen etwa 0,002 und etwa 0,1 Gew.%, bezogen auf den Träger, der Gesamtgehalt an Cer und Eisen zwischen etwa 0,1 und etwa 10 Gew.%, bezogen auf den Träger, der Gehalt an Gallium und Yttrium zwischen etwa 0,01 und etwa 10 Gew.%, bezogen auf den Träger liegt.

5. Katalysator nach Anspruch 4, dadurch gekennzeichnet, dass der Gehalt an Metallen aus der Gruppe von Platin und Palladium zwischen 0,05 und 0,15%, der an Metallen aus der Gruppe von Iridium und Rhodium zwischen 0,005 und 0,02% und der Gehalt an Gallium und Yttrium zwischen 0,02 und 0,5% liegt.

6. Katalysator nach irgendeinem der vorhergehenden Ansprüche, dadurch gekennzeichnet, dass die aktive Phase ausserdem mindestens einen der folgenden Metalle enthält: Wolfram, Kupfer, Mangan, Zinn, Germanium, Tantal, Uran, Niob mit einem Gesamtgewichtsgehalt zwischen etwa 0,1 und 5%, bezogen auf den Träger.

7. Verfahren zur Behandlung von Abgasen von Motoren mit innerer Verbrennung, insbesondere zur Entfernung des grössten Teiles von Kohlenmonoxid, der unverbrannten Kohlenwasserstoffe und der Stickstoffoxide, die in diesen Gasen vorhanden sind, dadurch gekennzeichnet, dass man den Katalysator nach einem der Ansprüche 1 bis 6 einsetzt.